# Europäisches Patentamt

## European Patent Office

## Office européen des brevets

(19)

(11) Veröffentlichungsnummer: **0 126 946**

**B1**

(12)

# EUROPÄISCHE PATENTSCHRIFT

(45) Veröffentlichungstag der Patentschrift:
21.09.88

(51) Int. Cl.⁴: **G 01 L 23/22**

(21) Anmeldenummer: **84104318.5**

(22) Anmeldetag: **17.04.84**

(54) Verfahren und Vorrichtung zur Erkennung des Klopfens einer Brennkraftmaschine.

(30) Priorität: **28.05.83 DE 3319458**

(43) Veröffentlichungstag der Anmeldung:
**05.12.84 Patentblatt 84/49**

(45) Bekanntmachung des Hinweises auf die Patenterteilung:
**21.09.88 Patentblatt 88/38**

(84) Benannte Vertragsstaaten:
**DE FR GB**

(56) Entgegenhaltungen:
**DE-A-3 031 511**

**PATENTS ABSTRACTS OF JAPAN, Band 7, Nr. 119 (P-198) 1262 , 21. Mai 1983 & JP - A - 58 37 531**
**PATENTS ABSTRACTS OF JAPAN, Band 7, Nr. 109 (P-196) 1254 , 12. Mai 1983 & JP - A - 58 30 637**

(73) Patentinhaber: **ROBERT BOSCH GMBH, Postfach 50, D-7000 Stuttgart 1 (DE)**

(72) Erfinder: **Damson, Eckart, Rastatterstrasse 34, D-7000 Stuttgart 31 (DE)**
Erfinder: **Klenk, Martin, Stresemannstrasse 11, D-7150 Backnang (DE)**
Erfinder: **Moser, Winfried, Grundweinberge 14, D-7140 Ludwigsburg (DE)**
Erfinder: **Möller, Heinz, Rastatterstrasse 30, D-7000 Stuttgart 31 (DE)**

EP 0 126 946 B1

## Beschreibung

### Stand der Technik

Die Erfindung geht aus von einem Verfahren nach der Gattung des Hauptanspruchs sowie einer Vorrichtung zur Durchführung des Verfahrens. Aus den DE-OS-3 009 046 und 3 137 016 sind bereits solche Verfahren zur Klopferkennung bekannt, wobei unter Klopfen Stoßwellen des Kraftstoff-Luft-Gemisches verstanden werden, die sich unter anderen als tonfrequente Schwingungen des Motors bemerkbar machen. Da mit dem Klopfen in der Regel eine starke thermische Belastung der brennraumseitigen Wandung des Zylinders und des Kolbens einhergehen, wobei Materialabtragungen auftreten können, ist man bestrebt das Klopfen grundsätzlich zu vermeiden, da es bei längerem Auftreten zu einer Zerstörung der Brennkraftmaschine führen kann. Dazu muß das Klopfen frühzeitig und sicher erkannt werden, wobei das meßtechnische Problem besteht, aus den vom Geber erfaßten Schwingungen der Brennkraftmaschine das Klopfsignal zuverlässig und störungsfrei herauszulesen. Dabei können z. B. der Druckverlauf, der Verlauf der Lichtintensität, die Flammenionisierung oder die Geräusche am Motor ausgewertet werden.

Bei dem bekannten System wird ein mittleres Grundgeräusch mit den augenblicklich vom Motor erzeugten Schwingungen verglichen, wobei das Integral der in elektrische Schwingungen umgeformten mechanischen Bewegungen innerhalb eines bestimmten Zeitfensters ausgewertet wird. Damit wird in einem eingeschränkten Frequenzspektrum nur die Amplitude und eventuell die Dauer der Klopfschwingung zur Erkennung verwendet. Die Überschreitung eines Referenzwertes wird dann als Klopfen gewertet. Weiterhin ist es aus den Patents Abstracts of Japan, Band 7, Nr. 119 (P-198) (1262), 21. Mai 1983 bekannt, Klopfen dadurch zu detektieren, daß das Klopfsignal nach einer Frequenzanalyse einem Vergleicher zugeführt wird, in dem das Klopfsignal mit einem Standardmuster verglichen wird. Bei diesem Vergleich wird eine "Straßenentfernung" kalkuliert und Klopfen dann erkannt, wenn die maximale "Straßenentfernung" einem vorgegebenen Wert überschreitet. Die Ermittlung dieses maximalen Wertes erfordert eine Diskussion des Kurvenzuges, die mit elektrischen Mitteln ausgeführt werden muß. Eine solche Diskussion ist jedoch schaltungstechnisch sehr aufwendig. Weiterhin ist es aus Patents Abstracts of Japan, Band 7, Nr. 109 (P-196) (1254), 12. Mai 1983 bekannt, zur Erkennung von Klopfen ein Meßfenster vorzusehen, und die gesamte Messung nur während eines Zeitintervalls erfolgen zu lassen, das zu einem bestimmten Winkelbereich bei der Drehung der Kurbelwelle korreliert wird. Schließlich ist es aus der DE-A-3 031 511 bekannt, zur Erkennung des Klopfens einer Brennkraftmaschine Spitzenwerte zu verwenden.

### Vorteile der Erfindung

Das erfindungsgemäße Verfahren mit den kennzeichnenden Merkmalen des Hauptanspruchs hat demgegenüber den Vorteil, daß die Signalauswertung durch einfache Differenz- und Summenbildung erfolgt, was elektrisch mit einfachen Schaltungen zu realisieren ist und auch bei einer Verarbeitung durch einen Mikroprozessor keinerlei Probleme aufweist. Besonders vorteilhaft ist dabei, daß in Weiterbildung der Erfindung in einfacher Weise auch Funktionen dieser Differenzwerte gebildet werden können, z. B. lineare oder quadratische Funktionen. Hierbei erweist es sich als besonders vorteilhaft, die ersten Differenzwerte schwächer als die nachfolgenden zu bewerten, da im vorderen Bereich üblicherweise größere Abweichungen auftreten.

Weiterhin kann ein Klopfvorgang vorteilhaft dann erkannt werden, wenn die einzelnen Differenzwerte oder Funktionen von Differenzwerten unterhalb eines Toleranzwertes oder Toleranzbandes bleiben.

Schließlich kann noch ein Toleranzbereich um den typischen Klopfverlauf herum festgelegt werden, wobei eine klopfende Verbrennung dann erkannt wird, wenn die gemessenen Klopfsignale innerhalb dieses Toleranzbereiches bleiben.

### Zeichnung

Zwei Ausführungsbeispiele der Erfindung sind in der Zeichnung dargestellt und in der nachfolgenden Beschreibung näher erläutert. Es zeigen Figur 1 ein erstes Ausführungsbeispiel der Erfindung im Blockschaltbild, Figur 2 ein zweites Ausführungsbeispiel der Erfindung im Blockschaltbild, Figur 3 die Darstellung des Signals eines Klopfsensors, Figur 4 eine durch einen Bandpaß gefilterte Klopfschwingung. Figur 5 ein Verlauf von Funktionswerten und Figur 5 ein Verlauf von aufsummierten Funktionswerten. Dabei ist zu beachten, daß die zweite und dritte Methode nicht beansprucht sind.

### Beschreibung der Ausführungsbeispiele

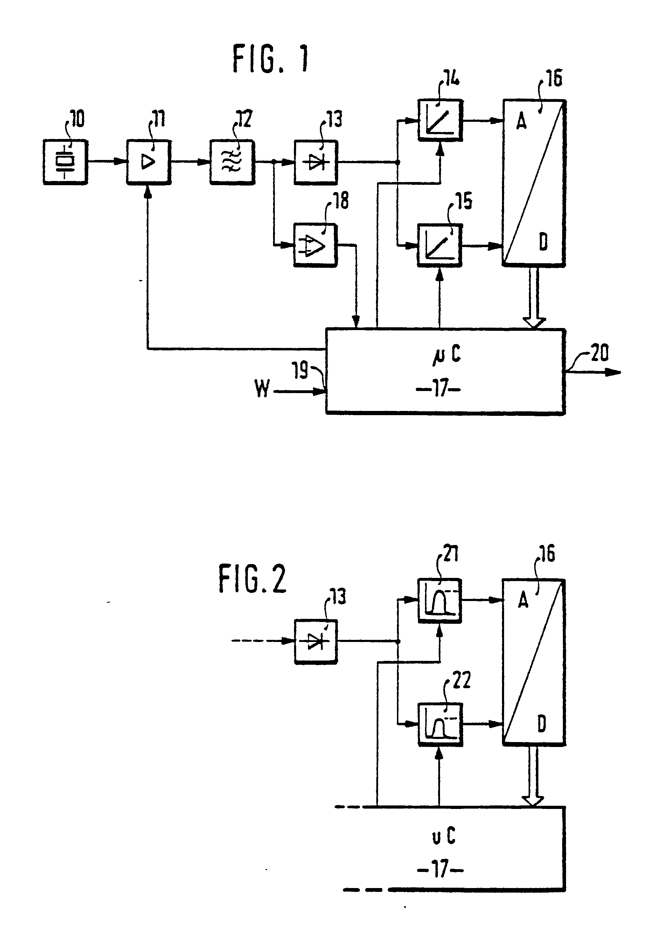

In dem in Figur 1 dargestellten ersten Ausführungsbeispiel sind die Signale eines Klopfsensors 10, der z. B. als Körperschall-Sensor (Auswertung des Motorgeräusches), als Lichtleiter in den Brennraum (optische Brennraumbeobachtung), als Drucksensor (Auswertung des Drucks im Brennraum) oder als lonenstromsonde (Auswertung des lonenstroms im Brennraum) ausgebildet sein kann, einer Verstärkerstufe 11 zugeführt, deren Ausgang über einen Bandpaß 12 mit einer Resonanzfrequenz von ca 6 KHz mit einer Gleichrichteranordnung 13 verbunden ist. Der Ausgang dieser Gleichrichteranordnung 13 ist über einen aus zwei Integrierstufen 14, 15 bestehenden Integrator einem Analog-Digital-Wandler 16 zugeführt, dessen Ausgänge an einen Mikrorechner 17 angeschlossen sind. Durch den Mikrorechner 17 wird einmal der Verstärkungsfaktor der Verstärkerstufe 11 gesteuert, sowie alternativ die beiden Integrierstufen 14, 15 eingeschaltet. Der Ausgang des Bandpasses 12 ist über einen z. B. als Komparator ausgebildeten Nulldurchgangsdetektor 18 mit dem Mikrorechner 17 verbunden. Prinzipiell ist anstelle dieses Nulldurchgangsdetektors 18 auch ein Spitzenwertdetektor möglich. Weiterhin ist dem Mikrorechner 17 eine Winkelinformation W über einen Eingang 19 zugeführt, wobei diese Winkelinformation entweder das Signal eines Drehwinkelgebers oder das Zündsignal der Brennkraftmaschine sein kann. Schließlich ist einem Ausgang 20 des Mikrorechners 17 die Klopfinformation zugeführt, d. h. die Information, ob Klopfen vorliegt oder nicht vorliegt. Diese Klopfinformation wird gewöhnlich einer Klopfregeleinrichtung zugeführt, die auf den Zündzeitpunkt, die Gemischzusammensetzung oder sonstige klopfmindernde Parameter einwirkt.

Das in Figur 2 dargestellte zweite Ausführungsbeispiel entspricht weitgehend dem ersten Ausführungsbeispiel, so daß entsprechende Baugruppen zur Vereinfachung der Darstellung nicht nochmals dargestellt sind. Der einzige Unterschied besteht darin, daß die Integrierstufen 14, 15 durch Spitzenwertspeicher 21, 22 ersetzt sind.

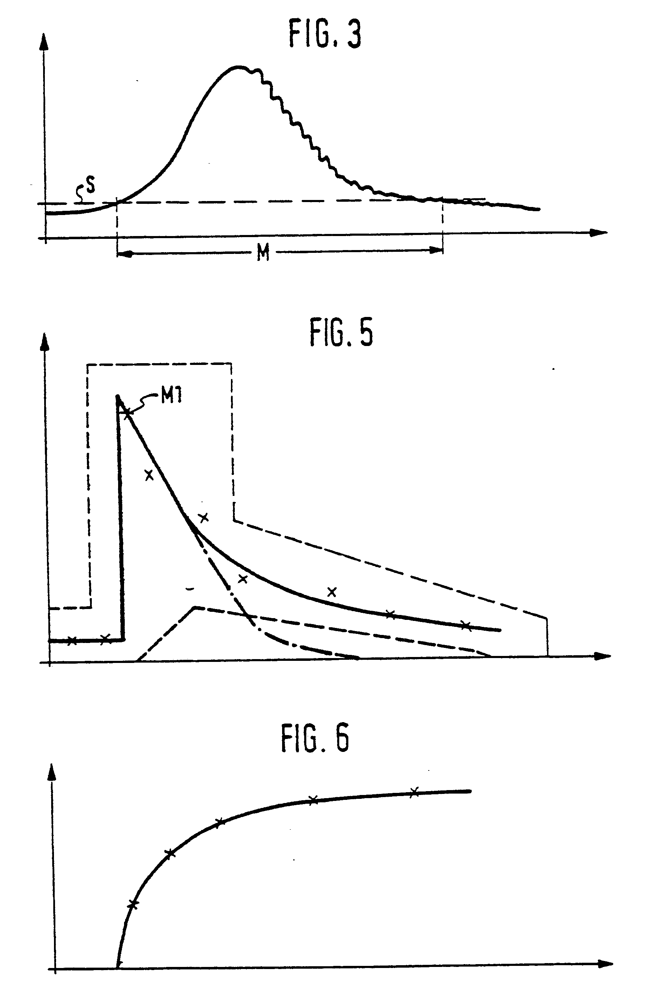

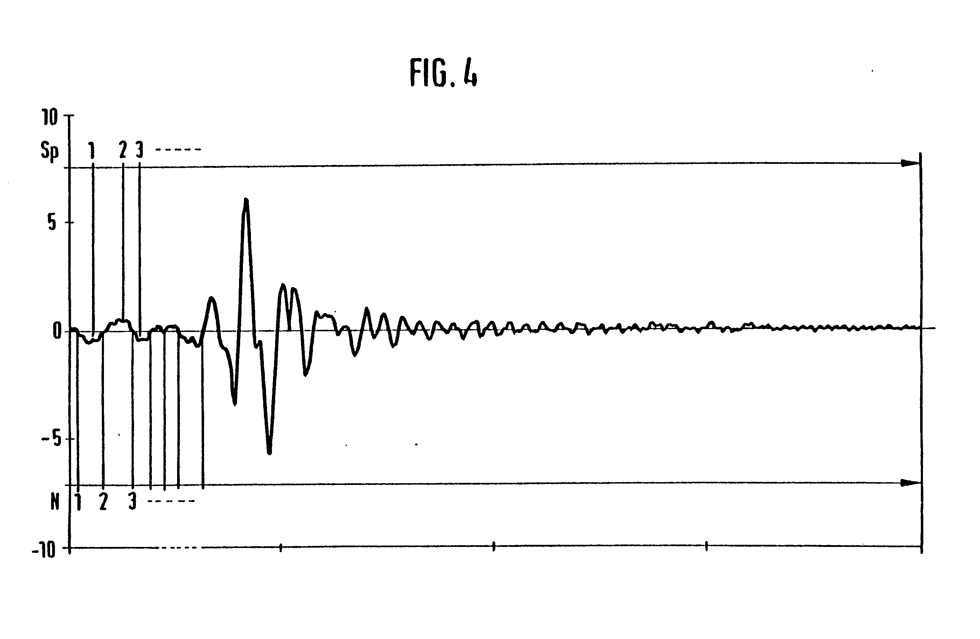

Die Wirkungsweise der in den Figuren 1 und 2 dargestellten Ausführungsbeispiele soll im folgenden anhand der in den Figuren 3 bis 6 dargestellten Diagramme erläutert werden. Zunächst sei festgehalten, daß die klopfende Verbrennung einer Brennkraftmaschine durch verschiedene, eingangs aufgeführte Arten erkannt werden kann. Der Schall-, Licht-, Druck- oder Ionenstromverlauf im Brennraum weist dabei einen ähnlichen, typischen Verlauf auf, wie er beispielsweise in Figur 3 dargestellt ist. Dieses typische Signal wird in der Verstärkerstufe 11 verstärkt. Um die Zugriffs- und Rechenzeit zu verkürzen, werden dabei vorzugsweise unwichtige Informationen ausgeblendet, indem ein Meßfenster M gebildet wird. Nur während dieses Meßfensters M erfolgt eine Auswertung von Gebersignalen. Das Meßfenster kann dabei entweder durch Überschreiten eines Schwellwerts S durch das Gebersignal oder während eines bestimmten Kurbelwellenwinkels gebildet werden. Dazu dient die am Eingang 19 anliegende Winkelinformation. Wird zur Meßfensterbildung die Methode der Schwellwertüberschreitung gewählt, so müßte zur entsprechenden Information das Ausgangssignal des Klopfsensors 10 über eine Schwellwertstufe dem Mikrorechner 17 zugeführt werden. Im übrigen ist die Methode zur Meßfensterbildung im eingangs angegebenen Stand der Technik ausführlich beschrieben, so daß hier nicht näher daraufhin eingegangen werden muß.

Der in Figur 3 dargestellte Gebersignalverlauf - beispielsweise des Drucks - weist im abfallenden Teil der Kurve Schwingungen auf, die daraufhin zu prüfen sind, ob sie durch eine klopfende Verbrennung verursacht sind. Durch die Bandpaßfilterung im Bandpaß 12 ergibt sich ein Signalverlauf gemäß Figur 4, der diese Schwingungen deutlicher erkennen läßt. Diese Schwingungen müssen nun darauf untersucht werden, ob sie auf eine klopfende Verbrennung zurückzuführen sind. Dazu werden zunächst einmal die Nulldurchgänge N durch den Nulldurchgangsdetektor 18 erfaßt und dem Mikrorechner 17 mitgeteilt. Wie bereits erwähnt, können alternativ auch die Spitzenwertdurchgänge Sp erfaßt werden. Jeweils zwischen zwei Nulldurchgängen erfolgen nun - gesteuert durch den Mikrorechner 17 - Integrationsvorgänge dieser in der Gleichrichteranordnung 13 gleichgerichteten Schwingungen (Hochklappen der negativen Halbwellen), die abwechselnd in den beiden Integrierstufen 14, 15 ablaufen (gemäß dem ersten Ausführungsbeispiel). Die ermittelten Integratorwerte werden über den Analog-Digital-Wandler 16 dem Mikrorechner 17 mitgeteilt. Dies hat den Vorteil, daß jeweils eine der Integrierstufen 14 bzw. 15 integriert, während die andere zur A-D-Wandlung gestoppt und anschließend wieder rückgesetzt wird. Alternativ können auch gemäß dem zweiten Ausführungsbeispiel die Spitzenwerte der Schwingung über die Spitzenwertspeicher 21, 22 erfaßt und als typische Funktionswerte dem Mikrorechner 17 mitgeteilt werden. In einem einfacheren Ausführungsbeispiel kann natürlich auch nur eine einzige solche Funktionswertbildungsstufe vorgesehen sein. Bei einer typischen Klopfschwingung weisen diese Funktionswerte (Integratorwerte bzw. Spitzenwerte) den in Figur 5 durch die durchgezogene Linie dargestellten Verlauf auf (siehe auch die in Figur 4 erkennbaren Spitzenwerte). Diese Linie ist somit als Sollwert-Kennlinie (Musterfunktion) in einem der Speicher des Mikrorechners 17 gespeichert. Innerhalb des Meßfensters werden nun die nacheinander eingehenden Funktionswerte aufgenommen. Die dadurch gebildete Istwert-Kennlinie muß nun mit der gespeicherten Sollwert-Kennlinie verglichen werden, wobei innerhalb der Toleranz einer vorgebbaren Abweichung bei Übereinstimmung eine klopfende Verbrennung erkannt wird. Um eine Übereinstimmung sinnvoll feststellen zu können, wird zunächst eine Normierung durchgeführt. Dazu wird beispielsweise der eingehende Meßwert M1 mit der größten Amplitude durch entsprechende Einstellung des Verstärkungsfaktors der Verstärkerstufe 11 auf die Sollwert-Kennlinie gelegt. Alternativ dazu kann natürlich auch die Sollwert-Kennlinie durch Multiplikation mit einem variablen Faktor auf diesen ersten Meßwert M1 gelegt werden. Weiterhin ist es möglich, die Normierung über die Summe aller Funktionswerte durchzuführen, indem der Normierungsfaktor durch Vergleich der beiden Summenwerte (z. B. Vergleich der beiden durch die Funktionskurve begrenzten Flächen) gebildet sind. Zur Auswertung ergeben sich nun verschiedene Möglichkeiten:

Die erste Methode besteht darin, daß bei den dem Wert M1 folgenden Meßwerten jeweils die Differenz zur Sollwert-Kennlinie bestimmt wird und diese Differenzen aufsummiert werden. Die somit ermittelte Gesamtdifferenz wird mit einem vorgegebenen Toleranzwert verglichen, wobei unterhalb dieses Toleranzwerts eine Übereinstimmung der beiden Kurven und damit eine klopfende Verbrennung festgestellt wird. Diese Rechenfunktionen können natürlich alternativ zu einem Mikrorechner auch in separaten Rechenstufen wie Substrahierern, Addierern und Komparatoren durchgeführt werden.

Die zweite Methode besteht darin, daß jede einzelne Differenz mit einem vorgegebenen Toleranzwert verglichen wird und nur dann eine klopfende Verbrennung erkannt wird, wenn keiner der einzelnen Differenzwerte den Toleranzwert überschreitet

Die dritte Methode, die eine Abwandlung der zweiten Methode darstellt, besteht darin, daß um die Sollwert-Kurve ein Toleranzbereich gelegt wird. Dieser ist in Figur 5 durch die unterbrochene Linie dargestellt. Nur wenn alle Meßwerte in diesem Toleranzbereich liegen, wird eine klopfende Verbrennung festgestellt. So zeigt beispielsweise die Strichpunktierte Linie in Figur 5 als Beispiel eine unregelmäßige Verbrennung, also kein Klopfen an. Da diese Kurve den Toleranz bereich verläßt, wird hier keine klopfende Verbrennung erkannt. Auf diese Weise lassen sich beliebige Funktionen von zulässigen Abweichungen durch die Musterfunktion realisieren.

Anstelle des Vergleichs von Differenzwerten mit einer Sollwert-Kennlinie (Musterfunktion) können auch andere Funktionen der Differenzwerte mit einer entsprechenden Musterfunktion verglichen werden. Möglich sind hierbei andere lineare oder nichtlineare, z. B. quadratische Funktionen der Differenzwerte. Weiterhin ist es auch möglich, den Anfangsbereich, wo die höchsten Amplituden auftreten, schwächer zu werten als den nachfolgenden Bereich, da im Anfangsbereich erfahrungsgemäß größere Schwankungen auftreten. Dies kann beispielsweise durch Überlagerung mit einer entsprechenden Dämpfungsfunktion erfolgen.

Eine Verbesserung kann noch dadurch erreicht werden, daß Schwankungen der Abstände zwischen Nulldurchgängen oder Spitzenwerten entsprechend berücksichtigt werden, d. h. die erfaßten Funktionswerte werden auch entsprechend dem Zeitpunkt des Auftretens der Musterfunktionen richtig zugeordnet.

Anstelle des Vergleichs der erfaßten Funktionswerte mit einer Musterfunktion können diese Funktionswerte auch aufsummiert werden, d.h., ein neuer Funktionswert wird jeweils hinzuaddiert, so daß sich der in Figur 6 dargestellte Kurvenverlauf ergibt. Dieser Kurvenverlauf wird dann gemäß einer der vorherigen Methoden mit einer Musterfunktion verglichen.

Es sei festgehalten, daß noch weitere Funktionswerte bzw. Kriterien zur Identifikation einer Folge von Meßwerten mit einer Musterfunktion herangezogen werden können. So können beispielsweise Steigungen, Steigungsänderungen usw. ebenfalls zur Identifikation herangezogen werden. Wesentlich für die Erfindung ist, daß ein erfaßter Schwingungsverlauf, z. B. gemäß Figur 3, mit einer Musterfunktion auf irgendeine Weise verglichen wird, und bei einer Übereinstimmung innerhalb einer vorgebbaren Toleranz eine klopfende Verbrennung erkannt wird.

Als zusätzliche Information zur Erkennung von klopfender Verbrennung kann das Abspeichern der Zahl der Nulldurchgänge bzw. der Spitzenwerte gewertet werden. Messungen haben gezeigt, daß klopfende Verbrennungen eine bestimmte Mindestanzahl von Integratorwerten bzw. Spitzenwerten aufweisen, die größer als ein vorzugebender Mindestwert ist. Wird diese Zahl unterschritten, so liegt ein Indiz vor, daß keine klopfende Verbrennung vorliegt. Hierzu wird die Anzahl der Werte oberhalb des Schwellenwerts im Mikrorechner 17 während des Meßfensters aufsummiert. Wird die vorgegebene Mindestanzahl von Werten dabei unterschritten, so wird der Ausgang des Mikrorechners 20 gesperrt, so daß keine klopfende Verbrennung angezeigt wird. Diese zusätzliche Maßnahme kann in einer einfacheren Ausführung der Erfindung auch weggelassen werden.

Ebenfalls als zusätzliche Information zur Erkennung von klopfender Verbrennung kann die Zeit zwischen zwei Nulldurchgängen ermittelt werden. Die sich daraus ergebende Frequenz muß innerhalb eines vorgegebenen Frequenzbandes liegen, das typisch für eine klopfende Verbrennung ist.

## Patentansprüche

1. Verfahren zur Erkennung des Klopfens einer Brennkraftmaschine, bei dem die Signale eines Klopfsensors mit Referenzsignalen, die Klopfen darstellen, verglichen werden, wobei aus den gefilterten Klopfsignalen typische Funktionswerte gebildet werden, wobei bei Übereinstimmung innerhalb einer vorgebbaren Toleranz ein Klopfvorgang erkannt wird, dadurch gekennzeichnet, daß aus den Signalen des Klopfsensors (10) und den Referenzsignalen Funktionen von Differenzwerten gebildet und jeweils aufsummiert werden, wobei bei einem Gesamtwert unterhalb eines Toleranzwertes ein Klopfvorgang erkannt wird.

2. Verfahren nach Anspruch 1, dadurch gekennzeichnet, daß die festgelegte Funktion eine lineare Funktion ist.

3. Verfahren nach Anspruch 1, dadurch gekennzeichnet, daß die festgelegte Funktion eine quadratische Funktion ist.

4. Verfahren nach einem der Ansprüche 1 bis 3, dadurch gekennzeichnet, daß die ersten Differenzwerte schwächer als die nachfolgenden gewichtet werden.

5. Verfahren nach einem der vorhergehenden Ansprüche, dadurch gekennzeichnet, daß der Vergleichsvorgang innerhalb eines Meßfensters (M) stattfindet.

6. Verfahren nach Anspruch 5, dadurch gekennzeichnet, daß das Meßfenster durch Überschreiten eines Schwellwerts (S) durch das Nutzsignal festgelegt wird.

7. Verfahren nach Anspruch 5, dadurch gekennzeichnet, daß das Meßfenster durch Winkelsignale, insbesondere Zündsignale, winkelmäßig festgelegt wird.

8. Verfahren nach einem der vorhergehenden Ansprüche, dadurch gekennzeichnet, daß zwischen Nutz- und Sollsignalen eine Normierung stattfindet, isnbesondere durch Normierung der größten vorkommenden Schwingungsamplitude oder der Summe aller Funktionswerte.

9. Verfahren nach einem der vorhergehenden Ansprüche, dadurch gekennzeichnet, daß die Integratorwerte oder Spitzenwerte, die oberhalb eines Schwellwerts liegen, aufsummiert werden, wobei das Überschreiten eines festgelegten Zahlenwerts eine notwendige Bedingung für eine Klopferkennung darstellt.

10. Verfahren nach einem der vorhergehenden Ansprüche, dadurch gekennzeichnet, daß die Frequenz der Nulldurchgänge oder Spitzenwerte mit einem vorgegebenem Frequenzband verglichen wird, wobei als notwendige Bedingung für eine Klopferkennung diese Frequenz innerhalb des Frequenzbandes liegen muß.

11. Vorrichtung zur Durchführung des Verfahrens nach einem der vorhergehenden Ansprüche, dadurch gekennzeichnet, daß ein Klopfsensor (10) über einen Bandpaß (12) und eine Gleichrichteranordnung (13) mit einer Funktionswertbildungsstufe (14, 15, 21, 22) verbunden ist, deren Ausgang über einen Analog-Digital-Wandler (16) an einem Mikrorechner (17) zum Vergleich der Funktionswerte mit den Sollwerten angeschlossen ist, wobei aus den Signalen des Klopfsensors (10) und den Referenzsignalen Funktionen von Differenzwerten gebildet und aufsummiert werden und bei einem Gesamtwert unterhalb eines Toleranzwertes ein Klopfvorgang erkann wird.

12. Vorrichtung nach Anspruch 11, dadurch gekennzeichnet, daß die Funktionswertbildungsstufe ein Integrator (14, 15) ist.

13. Vorrichtung nach Anspruch 11, dadurch gekennzeichnet, daß die Funktionswertbildungsstufe ein Spitzenwertspeicher (21, 22) ist.

14. Vorrichtung nach Anspruch 12 oder 13, dadurch gekennzeichnet, daß die Funktionswertbildungsstufe aus zwei Einzelstufen (14, 15 bzw. 21, 22) besteht, die vom Mikrorechner gesteuert abwechselnd Funktionswerte bilden.

15. Vorrichtung nach Anspruch 11, dadurch gekennzeichnet, daß dem Klopfsensor (10) eine Verstärkerstufe (11) nachgeschaltet ist, deren Verstärkungsfaktor vom Mikrorechner (17) gesteuert wird.

16. Vorrichtung nach Anspruch 11, dadurch gekennzeichnet, daß ein Nulldurchgangsdetektor (18) oder Spitzenwertdetektor zwischen den Ausgang des Bandpasses (12) und den Mikrorechner (17) geschaltet ist.

## Claims

1. Method for detecting the knocking of an internal combustion engine, in which method the signals of a knocking sensor are compared with reference signals which represent knocking, typical function values being formed from the filtered knocking values in which connection a knocking event is detected if correspondence occurs within a predeterminable tolerance, characterized in that functions of difference values are formed from the signals of the knocking sensor (10) and the reference signals and are in each case summed together, a knocking event being detected when a total value is below a tolerance value.

2. Method according to Claim 1, characterized in that the defined function is a linear function.

3. Method according to Claim 1, characterized in that the defined function is a quadratic function.

4. Method according to one of Claims 1 to 3, characterized in that the first difference values are weighted to be weaker than the subsequent ones.

5. Method according to one of the preceding claims, characterized in that the comparison process occurs within a measuring window (M).

6. Method according to Claim 5, characterized in that the measuring window is defined by a threshold value (S) being exceeded by the useful signal.

7. Method according to Claim 5, characterized in that the measuring window is defined with respect to angles, by angle signals, particularly ignition signals.

8. Method according to one of the preceding claims, characterized in that a normalization occurs between useful and nominal signals, in particular by normalizing the highest vibration amplitude occurring or the sum of all function values.

9. Method according to one of the preceding claims, characterized in that the integrator values or peak values lying above a threshold value are summed together, in which context the exceeding of a defined numerical value represents a necessary condition for a detection of knocking.

10. Method according to one of the preceding claims, characterized in that the frequency of the zero transitions or peak values is compared with a predetermined frequency band, in which context this frequency must lie within the frequency band as a necessary condition for a detection of knocking.

11. Device for carrying out the method according to one of the preceding claims, characterized in that a knocking sensor (10) is connected via a band-pass filter (12) and a rectifier arrangement (13) to a function value forming stage (14, 15, 21, 22), the output of which is connected via an analog/digital converter (16) to a microcomputer (17) for comparing the function values with the nominal values, in which arrangement functions of difference values are formed from the signals of the knocking sensor (10) and the reference signals and are summed together and a knocking event is detected if a total value lies below a tolerance value.

12. Device according to claim 11, characterized in that the function value forming stage is an integrator (14, 15).

13. Device according to Claim 11, characterized in that the function value forming stage is a peak value store (21, 22).

14. Device according to Claim 12 or 13, characterized in that the function value forming stage consists of two single stages (14, 15 and 21, 22) which, controlled by the microcomputer, alternately form function values.

15. Device according to Claim 11, characterized in that an amplifier stage (11), the gain factor of which is controlled by the microcomputer (17), follows the knocking sensor (10).

16. Device according to Claim 11, characterized in that a zero transition detector (18) or peak value detector is connected between the output of the band pass filter (12) and the microcomputer (17).

## Revendications

1. Procédé pour détecter le cognement d'un moteur à combustion interne, procédé dans lequel les signal d'un détecteur de cognement sont comparés à des signaux de référence qui représentent le cognement, des valeurs fonctionnelles typiques étant formées à partir des signaux de cognement filtrés, et lors de coïncidence à l'intérieur de tolérances susceptibles d'être définies, un processus de cognement est détecté, procédé caractérisé en ce qu'à partir des signaux du détecteur de cognement (10) et des signaux de référence, des fonctions de valeurs différentielles sont formées et respectivement totalisées, un processus de cognement étant alors identifié pour une valeur totale se situant au-dessous d'une valeur de tolérance.

2. Procédé selon la revendication 1, caractérisé en ce que la fonction établie est une fonction linéaire.

3. Procédé selon la revendication 1, caractérisé en ce que la fonction établie est une fonction quadratique.

4. Procédé selon une des revendications 1 à 3, caractérisé en ce que les premières valeurs différentielles sont pondérées plus faiblement que les valeurs suivantes.

5. Procédé selon une des précédentes revendications, caractérisé en ce que le processus de comparaison se déroule à l'intérieur d'une fenêtre de mesure (M).

6. Procédé selon la revendication 5, caractérisé en ce que la fenêtre de mesure est déterminée par dépassement d'une valeur de seuil (S) par le signal utile.

7. Procédé selon la revendication 5, caractérisé en ce que la fenêtre de mesure est déterminée angulairement par des signaux d'angles, notamment des signaux d'allumage.

8. Procédé selon une des précédentes revendications, caractérisé en ce qu'entre les signaux utiles et les signaux de consigne, a lieu une normalisation, notamment par normalisation de l'amplitude maximale se présentant, ou bien de la somme de toutes les valeurs fonctionnelles.

9. Procédé selon une des précédentes revendications, caractérisé en ce que les valeurs d'intégration ou les valeurs de pointe, qui se situent au-dessus d'une valeur de seuil, sont totalisées, le dépassement d'une valeur de comptage fixée étant une condition nécessaire pour la détection d'un cognement.

10. Procédé selon une des précédentes revendications, caractérisé en ce que la fréquence des passages par zéro ou bien des valeurs de pointe, est comparée avec une bande de fréquence prédéfinie, la condition nécessaire pour la détection d'un cognement étant que cette fréquence doit se situer à l'intérieur de cette bande de fréquence.

11. Dispositif pour la mise en oeuvre du procédé selon une des précédentes revendications, dispositif caractérisé en ce qu'un détecteur de cognement (10) est relié par l'intermédiaire d'un passe-bande (12) et d'un dispositif redresseur (13) à un étage de formation de valeurs fonctionnelles, (14, 15, 21, 22), dont la sortie est raccordée par l'intermédiaire d'un convertisseur analogique-numérique (16) à un micro-calculateur (17 ) pour permettre de comparer les valeurs fonctionnelles avec les valeurs de consigne, cependant qu'à partir des signaux du détecteur de cognement (10) et des signaux de référence, des fonctions de valeur différentielle sont formées et sont totalisées, et pour une valeur totale se situant au-dessous d'une valeur de tolérance, un processus de cognement est détecté.

12. Dispositif selon la revendication 11, caractérisé en ce que l'étage de formation de valeurs fonctionnelles est un intégrateur (14, 15).

13. Dispositif selon la revendication 11, caractérisé en ce que l'étage de formation de valeurs fonctionnelles est une mémoire de valeurs de pointes (21, 22).

14. Dispositif selon la revendication 12 ou 13, caractérisé en ce que l'étage de formation de valeurs fonctionnelles est constitué de deux étages individuels (14, 15 ou bien 21, 22) qui en étant commandés par le micro-calculateur, forment alternativement des valeurs fonctionnelles.

15. Dispositif selon la revendication 11, caractérisé en ce qu'un étage amplificateur (11) est branché à la suite du détecteur de cognement (10), le facteur d'amplification de cet étage amplificateur étant commandé par le micro-calculateur (17).

16. Dispositif selon la revendication 11, caractérisé en ce qu'un détecteur de passage par zéro (18) ou bien un détecteur de valeurs de pointes, est branché entre la sortie du passe-bande (12) et le micro- calculateur (17).

# FIG. 1

# FIG.2

# FIG. 3

# FIG. 5

# FIG. 6

FIG. 4